# EUROPEAN PATENT APPLICATION

(11) **EP 3 112 480 A1**
(43) Date of publication of application: **04.01.2017**
(21) Application number: 15754530.2
(22) Date of filing: 24.02.2015
(51) Int. Cl.: C21D 8/12, B23K 15/00, H01F 1/16, H01F 41/02

(54) **GRAIN-ORIENTED ELECTRICAL STEEL SHEET FOR LOW-NOISE TRANSFORMER, AND METHOD FOR MANUFACTURING SAID SHEET**

(30) Priority: 28.02.2014 JP 2014039169
(71) Applicant: JFE Steel Corporation, Tokyo 100-0011 (JP)
(72) Inventor: TODA, Hiroaki, Tokyo 100-0011 (JP); TAKAJO, Shigehiro, Tokyo 100-0011 (JP); KOMATSUBARA, Michiro, Tokyo 100-0011 (JP)
(74) Representative: Hoffmann Eitle
(86) International application number: PCT/JP2015/000934
(87) International publication number: WO 2015/129255

(57) **Abstract**

Provided is a grain-oriented electrical steel sheet subjected to magnetic domain refining treatment by irradiating a steel sheet surface with an electron beam having a beam diameter d of 0.40mm or less in a line region extending in a direction intersecting a rolling direction, wherein
a modulated irradiation line region is formed with repeating units connected to each other in the line region direction,
a periodic distance of the repeating units in the modulated irradiation line region is 2/3×d mm to 2.5×d mm,
a repeating interval of the modulated irradiation line region in the rolling direction is 4.0mm to 12.5mm, and
intensity of the electron beam is not lower than an intensity with which long and narrow divided magnetic domains extending in the modulated irradiation line region direction are formed at least on an irradiated side, and not higher than an intensity with which coating damage does not occur and a plastic strain region is not formed on the irradiated side. Thus, magnetic domain refining treatment can be carried out under a condition which achieves both low iron loss and low noise of the transformer, which was conventionally considered difficult, and an unconventional grain-oriented electrical steel sheet with low iron loss and low magnetostriction can be obtained.

## Description

### TECHNICAL FIELD

This disclosure relates to a grain-oriented electrical steel sheet for a low-noise transformer, and a method for manufacturing said sheet.
One example of a technique for refining magnetic domains of a grain-oriented electrical steel sheet is forming grooves in the steel sheet surface. With such technique, the effect obtained will not be lost even when stress relief annealing is performed. In contrast, the technique disclosed herein utilizes an electron beam irradiation method which is known as a method of introducing strain to the surface layer of the steel sheet to refine magnetic domains and reduce iron loss as in the cases of laser irradiation, plasma jet flame irradiation, scribing and the like, and aims particularly at achieving low iron loss and low magnetostriction at the same time.

### BACKGROUND

In recent years, in the context of efficient use of energy, there have been demands mainly from transformer manufacturers and the like for a transformer with low iron loss and low noise. Therefore, a grain-oriented electrical steel sheet with high magnetic flux density, low iron loss and low magnetostriction is required. A grain-oriented electrical steel sheet has tension coating on the outermost surface thereof which also serves the function of imparting electrical insulation properties, and by making the crystal orientations of the steel sheet in accord with the Goss orientation, the magnetic flux density can be improved.

For example, JP4123679B (PTL 1) describes a method for manufacturing a grain-oriented electrical steel sheet with a magnetic flux density B₈ exceeding 1.97 T.

On the other hand, iron loss properties can be improved by increased purity of material, high orientation, reduced sheet thickness, addition of Si and Al, magnetic domain refining and the like (for example, see 155th/156th Nishiyama Memorial Technical Seminar, p. 109∼198 (NPL 1)).

However, generally, iron loss properties tend to deteriorate as the magnetic flux density B₈ increases. For example, if crystal orientations are made highly in accord with the Goss orientation for the purpose of improving B₈, the magnetostatic energy decreases, the magnetic domain width widens, and causes the eddy current loss to rise. Therefore, as a method of reducing such eddy current loss, previously mentioned techniques such as applying tension coating or introducing thermal strain to the surface layer of the steel sheet to refine magnetic domains to thereby reduce iron loss, have been used.

However, for example, with the method for improving film tension described in JPH028027B (PTL 2), the applied strain is limited to a small area near an elastic region and the tension effect is exerted only in the surface layer part of the steel substrate. Therefore, iron loss cannot be sufficiently reduced.

Meanwhile, magnetic domain refining through application of thermal strain is performed by plasma flame irradiation, laser irradiation and the like. For example, JPH0313293B (PTL 3) describes a technique of performing laser scanning irradiation under a certain condition to apply thermal strain to a steel sheet, and JPH0657333A (PTL 4) describes a technique of using a pulse Q switch laser with a half value width of 10 nsec or more and 1 µsec or less, condensing laser light at a light intensity of 1 × 10⁵ W/cm² to 1 × 10⁸ W/cm², and intermittently applying thermal strain to a steel sheet, and both techniques aim at refining magnetic domains to reduce iron loss.

With these techniques, thermal strain is introduced to the steel sheet surface and therefore magnetic domains are refined and eddy current loss decreases. However, hysteresis loss increases. Particularly in cases such as pulse irradiation, for example, JP4344264B (PTL 5) describes that a hardening region caused in the surface layer of the steel sheet through laser irradiation and the like i.e. plastic strain region hinders domain wall displacement so as to increase hysteresis loss. In such case, strain concentrates locally in a portion of the surface layer part of the steel sheet and results in an insufficient iron loss reduction effect, an increase of hysteresis loss is caused by strain and again results in an insufficient iron loss reduction effect, and further, magnetostriction caused by strain increases.

To solve such problem, PTL 5 describes a technique for reducing iron loss by adjusting the laser output and the spot diameter ratio to reduce the size of a plastic strain region, which hardens with laser irradiation in a direction perpendicular to the laser scanning direction, to 0.6 mm or less, and by reducing hysteresis loss. However, even with these techniques, the plastic strain in the steel sheet surface causes an increase of magnetostriction, and as a result, the noise of the transformer increases. Therefore, these techniques are not considered sufficient.

Further, with the techniques of irradiating an electron beam described in US4195750A (PTL 6) and US4199733A (PTL 7), an electron beam is continuously irradiated in the sheet transverse direction, and therefore the strain distribution in the steel sheet transverse direction is relatively uniform. Since the irradiated electrons, unlike laser, enter deeply into the steel sheet transverse direction, good energy efficiency is achieved. However, since thermal strain is caused by heat generation inside the steel sheet, noise properties deteriorate.

In order to solve this problem, JPH05335128A (PTL 8) describes a technique for obtaining a grain-oriented electrical steel sheet with excellent noise properties and iron loss properties while suppressing thermal strain generation by controlling the current value of the irradiated electron beam, the travelling speed of the electron beam in the steel sheet transverse direction, the irradiation pitch in the rolling direction, and the beam diameter of the electron beam within a certain range.

However, this technique is also not considered sufficient for reducing magnetostriction which becomes the cause of transformer noise, and a grain-oriented steel sheet with even less magnetostriction and iron loss is required.

### CITATION LIST

### Patent Literature

PTL 1: JP4123679B
PTL 2: JPH028027B
PTL 3: JPH0313293B
PTL 4: JPH0657333A
PTL 5: JP4344264B
PTL 6: US4195750A
PTL 7: US4199733A
PTL 8: JPH05335128A

### Non-patent Literature

NPL 1: 155^{th}/156^{th} Nishiyama Memorial Technical Seminar, p.109∼196
NPL 2: Iron and Steel, the 69th year (1983) No. 8, pp.9-16
NPL 3: Journal of Magnetics Society of Japan, Vol.25, No.12, pp.1612-1618, 2001

### SUMMARY

### (Technical Problem)

Generally, when refining magnetic domains of a grain-oriented electrical sheet by laser beam irradiation, due to the strong interaction between the laser beam and the surface coating, a region with a higher dislocation density is formed in the steel sheet near the irradiated portion by a rapid thermal deformation of the steel sheet caused near the irradiated surface or reaction force applied to the steel sheet as induced by rapid vaporization of the coating. As a result, the hardness of the steel sheet increases, and at the same time, the steel sheet deforms and leads to an increase in hysteresis loss (see for example, Iron and Steel, the 69th year (1983) No. 8, pp.9-16 (NPL 2)). In other words, forming a region with a higher dislocation density near the irradiated part of the steel sheet surface, and generating 90° magnetic domains in the steel sheet is the basic principle of magnetic domain refining according to this technique. Therefore, in association with the decrease in eddy current loss caused by magnetic domain refining, hysteresis loss and magnetostriction are inevitably increased. Therefore, any technique utilizing thermal strain created by laser beam irradiation such as conventional techniques would not enable concurrently achieving all of magnetic domain refining, low hysteresis loss and low magnetostriction.

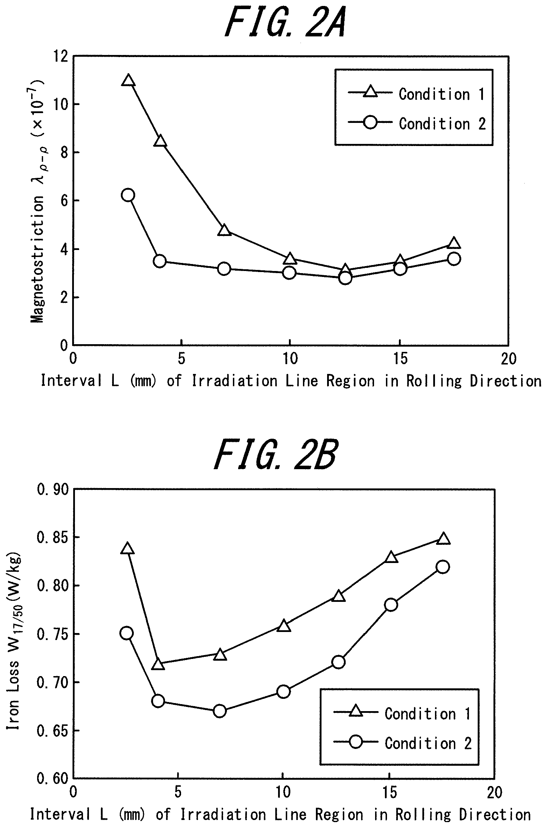

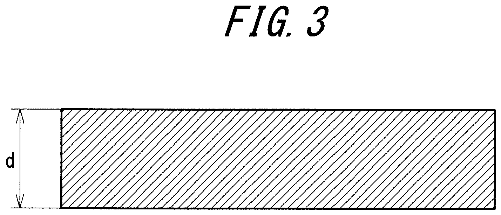

On the other hand, with the electron beam irradiation technique, electrons propagate more inside the steel sheet than on the steel sheet surface, and therefore it is considered that magnetic domain refining can be achieved without utilizing plastic strain of the surface layer of the steel sheet. However, as it is described in PTL 8, depending on the intensity of the electron beam, thermal strain is also generated inside the steel sheet and causes an increase in hysteresis loss and magnetostriction. Therefore, as described in PTL 8, it is necessary to control the surface energy density α of the electron beam and the energy density P of the electron beam irradiated part (energy density on the electron beam scan line) within a certain range. However, with this technique, the optimum condition for iron loss shown in Fig. 2 and the optimum condition for low noise shown in Fig. 3 in PTL 8 greatly differ, and an optimum condition for both iron loss and low noise could not be discovered. For these reasons, this technique was insufficient for improving both characteristics at the same time.

### (Solution to Problem)

We came to think that, generally, when irradiating a steel sheet with an electron beam, the optimum condition for both iron loss and magnetostriction can be found by adjusting the energy density of the irradiated part.

To be more specific, we reasoned that the beam irradiation line density β described in PTL 8 corresponds to the energy density of the irradiated part, and by setting a value of P larger than a predetermined minimum value, a magnetic domain refining effect can be obtained, and by setting a value of β smaller than the maximum value, the plastic strain of the steel sheet surface layer can be reduced, and as a result, the increase in hysteresis loss and noise can be suppressed.

This corresponds to the fact that excellent iron loss properties can be achieved in the region of β ≥ 10 - α/0.06 (J/cm²) in Fig. 2 of PTL 8, and low noise can be achieved in the region of β ≤ 11.25 - α/0.08 (J/cm²) in Fig. 3 of PTL 8.

However, an interaction between domain walls and strain, such as magnetostriction deterioration caused by inhibiting magnetic domain refining or domain wall displacement, is a local physical action that occurs near domain walls, and it is originally unthinkable that such physical action would depend on an energy density α of the whole steel sheet surface as described in PTL 8.

In view of the above, we made intensive studies for the substantial physical action of the value of β, and found that the occurrence of coating damage caused by thermal strain in the steel sheet surface is involved with magnetostriction deterioration when the value of β is large, while the disappearing of long and narrow divided magnetic domains extending in the irradiation line direction in the irradiation line region is the essence of the presence of magnetic domain refining when the value of β is small. In detail, in terms of the required electron beam irradiation energy intensity, it was made clear that the substantial technique is to irradiate an electron beam at an intensity of or higher than a level where long and narrow divided magnetic domains extending in the irradiation line direction in the electron beam irradiation line region exist, and to suppress generation of thermal strain in the steel sheet surface and occurrence of coating damage in the surface of the irradiated side of the steel sheet, and further to perform electron beam irradiation at an intensity level that does not form a plastic strain region.

When irradiating grain-oriented electrical steel sheets with an electron beam with sheet thickness of 0.23 mm, B₈ of 1.943 T, and iron loss W_{17/50} of 0.85 W/kg, irradiation was performed at an acceleration voltage Vk of 40 kV to 120 kV, beam current I of 0.5 mA to 8 mA, beam diameter d of 0.015 cm to 0.040 cm, scanning rate V of 900 cm/s to 5000 cm/s, irradiation line interval L in the rolling direction of 0.5 cm, and β = (Vk·I)/(V·d) changed variously between 0.43 (J/cm²) and 24.7 (J/cm²), and Table 1 shows the results of investigating the coating damage of the steel sheet surface and the presence of formation of long and narrow divided magnetic domains extending in the irradiation line region direction, as well as iron loss, hysteresis loss and magnetic strain λp-p of the steel sheets.

[Table 1]

**Table 1**

| Condition No. | Energy Density of Irradiation Line Region (J/cm²) | Experimental Results | | | | | |
|---|---|---|---|---|---|---|---|
| | | Ratio of Coating Damage in Irradiation Line Region (%) | Presence of Long and Narrow Divided Magnetic Domains in Irradiation Line Region | Iron Loss W_{17/50} (W/kg) | Hysteresis Loss Wh_{17/50} (W/kg) | Magnetostriction λp-p (×10⁻⁷) | Evaluation |
| 1 | 0.43 | 0 | Not Present | 0.82 | 0.28 | 3.4 | Poor |
| 2 | 1.2 | 0 | Not Present | 0.81 | 0.28 | 3.3 | Poor |
| 3 | 3.2 | 0 | Not Present | 0.80 | 0.28 | 3.1 | Poor |
| 4 | 4.5 | 0 | Present | 0.75 | 0.30 | 2.9 | Good |
| 5 | 5.3 | 0 | Present | 0.73 | 0.29 | 2.8 | Good |
| 6 | 6.2 | 0 | Present | 0.73 | 0.30 | 2.8 | Good |
| 7 | 7.6 | 0 | Present | 0.72 | 0.31 | 2.9 | Good |
| 8 | 8.4 | 0 | Present | 0.71 | 0.31 | 3.2 | Good |
| 9 | 9.2 | 0 | Present | 0.71 | 0.31 | 3.4 | Good |
| 10 | 10.3 | 0 | Present | 0.72 | 0.32 | 3.8 | Good |
| 11 | 13.5 | 2 | Present | 0.74 | 0.33 | 4.1 | Poor |
| 12 | 16.8 | 6 | Present | 0.75 | 0.35 | 4.3 | Poor |
| 13 | 20.4 | 15 | Present | 0.76 | 0.37 | 4.8 | Poor |
| 14 | 24.7 | 28 | Present | 0.78 | 0.39 | 5.7 | Poor |

As shown in Table 1, regarding the favorable ranges of iron loss, hysteresis loss and magnetic strain, the lower limit value of the energy density of the irradiated part is the lower limit value where long and narrow divided magnetic domains extending in the irradiation direction exist (NPL 3), while the upper limit value of the energy density is the upper limit value where coating damage is not caused. Further, it can be seen from Table 1 that the conditions with the lowest iron loss (Condition Nos. 8 and 9) and the conditions with the lowest magnetostriction (Condition Nos. 5 and 6) do not necessarily match.

Under the situation, intensive studies were then made for an irradiation method of an electron beam that can achieve the minimum value of iron loss and the minimum value of magnetostriction with the same irradiation condition. As a result, we newly found that, when irradiating a steel sheet with an electron beam in a line region in a direction intersecting a rolling direction, it is possible to achieve the minimum value of iron loss and the minimum value of magnetostriction under the same irradiation condition by adopting a combination of two different irradiation conditions, one for retention regions and the other for travelling regions, and repeating a process to form such combination unit and connecting the units to create an irradiation line region (hereinafter referred to as a modulated irradiation line region), rather than adopting an irradiation condition where such an irradiation line region is continuous and uniform as is the case with conventional methods.

The experiment which became the first step toward the above discovery is explained below.

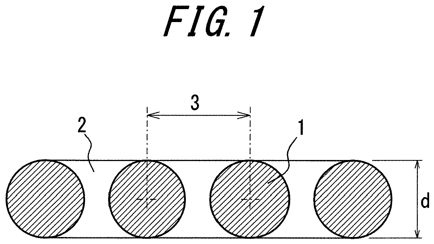

On grain-oriented electrical steel sheets with sheet thickness of 0.23 mm, B₈ of 1.943 T, and iron loss W_{17/50} of 0.85 W/kg, an electron beam was irradiated at an acceleration voltage Vk: 60 kV, beam current I: 8.5 mA, beam diameter d: 0.30 mm, scanning rate V: 30 m/sec, with the irradiation line interval L in the rolling direction varied between 2.5 mm and 30 mm. In doing so, one steel sheet was subjected to continuous irradiation under a fixed irradiation condition (condition 1) to obtain a comparative example. For another steel sheet, electron beam irradiation was performed under an irradiation condition (condition 2) where a repeating unit 3 having a total region of 0.45 mm (which is also the periodic distance of the repeating unit) comprising a retention region 1 and a travelling region 2 of the beam as shown in Fig. 1 is used, and electron beam irradiation was performed repeatedly in the steel sheet transverse direction to form a modulated irradiation line region. At this time, the retention time in the retention point was set to be 0.015 msec, and the travelling speed in the travelling region 2 was adjusted so that the average scanning rate is 30 m/sec.

The results of investigating the relationship between the interval L in the rolling direction of the irradiation line region and iron loss as well as the relationship between said interval L and magnetostriction are shown in Fig. 2.

As it can be seen from Fig. 2, when performing irradiation in accordance with the method disclosed herein (condition 2), not only are the best values achieved of iron loss and magnetostriction better than those achieved when performing the conventional continuous irradiation (condition 1), but the best values of both iron loss and magnetostriction are achieved under almost the same irradiation conditions (interval in rolling direction of irradiation line region: 4.0 mm to 12.5 mm).

These results indicate that, using a grain-oriented electrical steel sheet subjected to magnetic domain refining treatment, a transformer with low iron loss and low noise can be obtained from the same material, and it is clear that the technique is a novel, industrially meaningful, excellent technique.

The disclosure has been completed based on the above findings and further considerations.

We thus provide:
1. A grain-oriented electrical steel sheet for a low-noise transformer subjected to magnetic domain refining treatment by irradiating a steel sheet surface with an electron beam having a beam diameter d of 0.40 mm or less in a line region extending in a direction intersecting a rolling direction, forming the irradiated line region into a modulated irradiation line region with repeating units, each unit comprising a retention region and a travelling region, and repeating a process to form the modulated irradiation line region at intervals in the rolling direction, wherein
   the modulated irradiation line region is formed with repeating units connected to each other in the line region direction,
   a periodic distance of the repeating units in the modulated irradiation line region is 2/3 × d mm to 2.5 × d mm,
   a repeating interval of the modulated irradiation line region in the rolling direction is 4.0 mm to 12.5 mm, and
   intensity of the electron beam is not lower than an intensity with which long and narrow divided magnetic domains extending in the modulated irradiation line region direction are formed at least on an irradiated side, and not higher than an intensity with which coating damage does not occur and a plastic strain region is not formed on the irradiated side.
2. The grain-oriented electrical steel sheet for a low-noise transformer according to aspect 1 wherein an acceleration voltage of the electron beam is 100 kV or more.
3. The grain-oriented electrical steel sheet for a low-noise transformer according to aspect 1 or 2 wherein the repeating interval of the modulated irradiation line region in the rolling direction is 5.0 mm to 10 mm.
4. A method for manufacturing a grain-oriented electrical steel sheet for a low-noise transformer comprising subjecting the steel sheet to magnetic domain refining treatment by irradiating a steel sheet surface with an electron beam having a beam diameter d of 0.40 mm or less in a line region extending in a direction intersecting a rolling direction, forming the irradiated line region into a modulated irradiation line region with repeating units, each comprising a retention region and a travelling region, and repeating a process to form the modulated irradiation line region at intervals in the rolling direction, wherein
   the modulated irradiation line region is formed with repeating units connected to each other in the line region direction,
   a periodic distance of the repeating units in the modulated irradiation line region is 2/3 × d mm to 2.5 × d mm,
   a repeating interval of the modulated irradiation line region in the rolling direction is 4.0 mm to 12.5 mm, and
   intensity of the electron beam is not lower than an intensity with which long and narrow divided magnetic domains extending in the modulated irradiation line region direction are formed at least on an irradiated side, and not higher than an intensity with which coating damage does not occur and a plastic strain region is not formed on the irradiated side.
5. The method for manufacturing a grain-oriented electrical steel sheet for a low-noise transformer according to aspect 4 wherein an acceleration voltage of the electron beam is 100 kV or more.
6. The method for manufacturing a grain-oriented electrical steel sheet for a low-noise transformer according to aspect 4 or 5 wherein the repeating interval of the modulated irradiation line region in the rolling direction is 5.0 mm to 10 mm.

### (Advantageous Effect)

According to the disclosure, it is possible to carry out magnetic domain refining treatment under a condition which achieves both low iron loss and low noise of the transformer at the same time which was conventionally considered difficult. Further, since it is possible to obtain an unconventional grain-oriented electrical steel sheet with low iron loss and low magnetostriction, it is possible to improve energy use efficiency of the transformer while suppressing noise. For these reasons, the disclosure is extremely useful for the industry.

### BRIEF DESCRIPTION OF THE DRAWINGS

In the accompanying drawings:
FIG. 1 shows a modulated irradiation line region which is a feature of the disclosure together with a retention region and a travelling region constituting a repeating unit, during electron beam irradiation in the steel sheet transverse direction;
FIG. 2 shows the relationship between the interval L in the rolling direction of the irradiation line region and magnetostriction λp-p and iron loss W_{17/50} of a grain-oriented electrical steel sheet subjected to magnetic domain refining treatment when applying a conventional magnetic domain refining technique in which continuous electron beam irradiation is performed (condition 1), and when applying a magnetic domain refining technique disclosed herein in which electron beam irradiation is performed so that modulated irradiation line regions are repeatedly formed (condition 2);
FIG. 3 shows an irradiation line region according to a conventional technique in which an electron beam is continuously irradiated during electron beam irradiation in the steel sheet transverse direction;

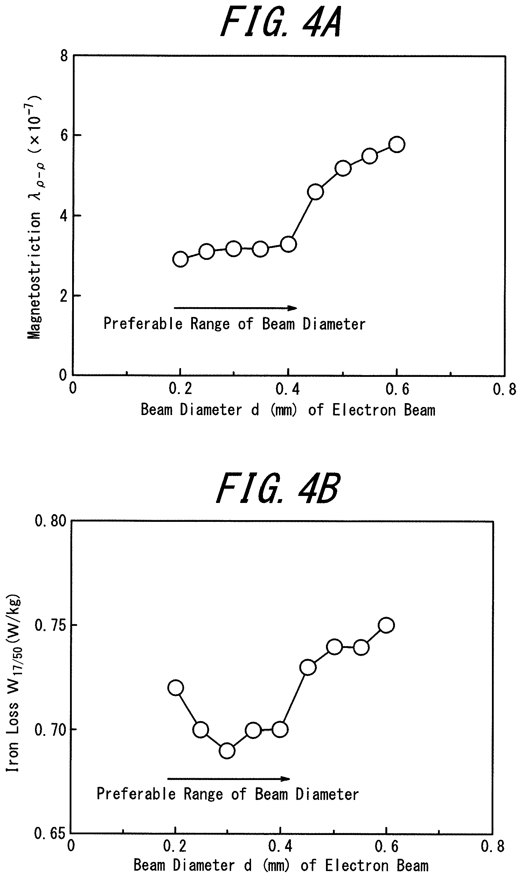

FIG. 4 shows the influence of the beam diameter of an electron beam on iron loss and magnetostriction of a grain-oriented electrical steel sheet subjected to magnetic domain refining treatment in the magnetic domain refining technique disclosed herein in which electron beam irradiation is performed so that modulated irradiation line regions are repeatedly formed;

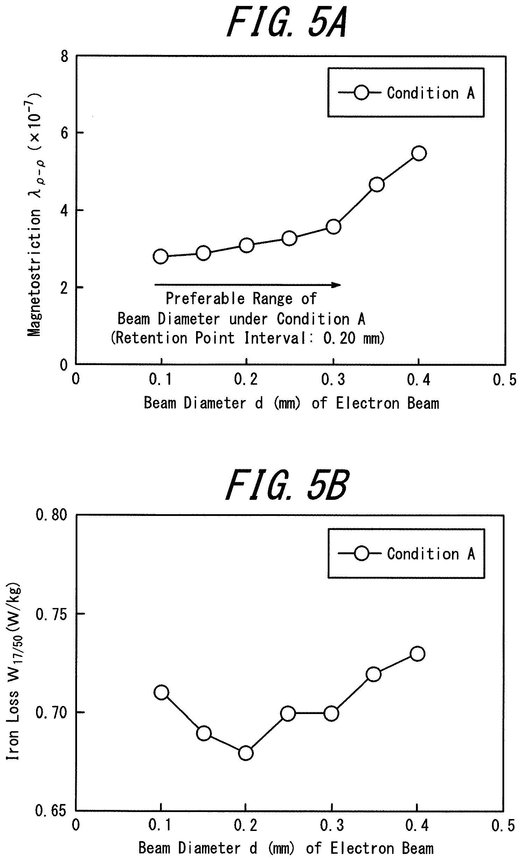

FIG. 5 shows the relationship between the beam diameter of an electron beam and iron loss and magnetostriction of a grain-oriented electrical steel sheet subjected to magnetic domain refining treatment when forming a modulated irradiation line region under condition A (periodic distance of repeating unit: 0.20 mm) in the magnetic domain refining technique disclosed herein in which electron beam irradiation is performed so that modulated irradiation line regions are repeatedly formed;

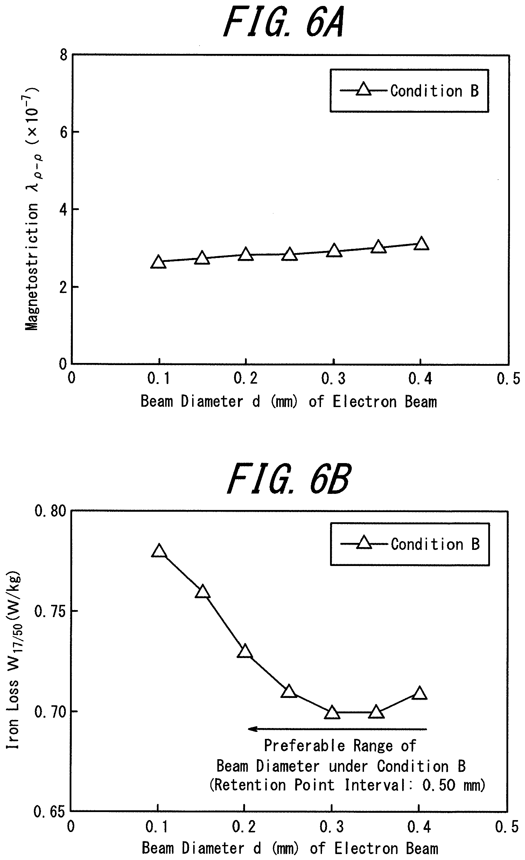

FIG. 6 shows the relationship between the beam diameter of an electron beam and iron loss and magnetostriction of a grain-oriented electrical steel sheet subjected to magnetic domain refining treatment when forming a modulated irradiation line region under condition B (periodic distance of repeating unit: 0.50 mm) in the magnetic domain refining technique disclosed herein in which electron beam irradiation is performed so that modulated irradiation line regions are repeatedly formed;

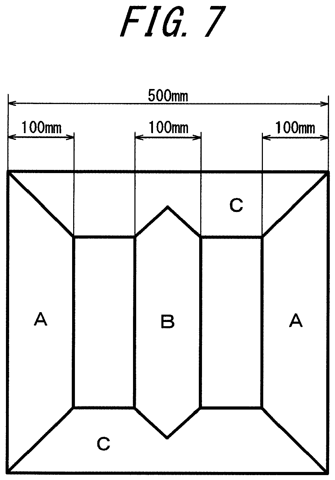

FIG. 7 shows the size and shape of the iron core of a transformer produced in examples; and

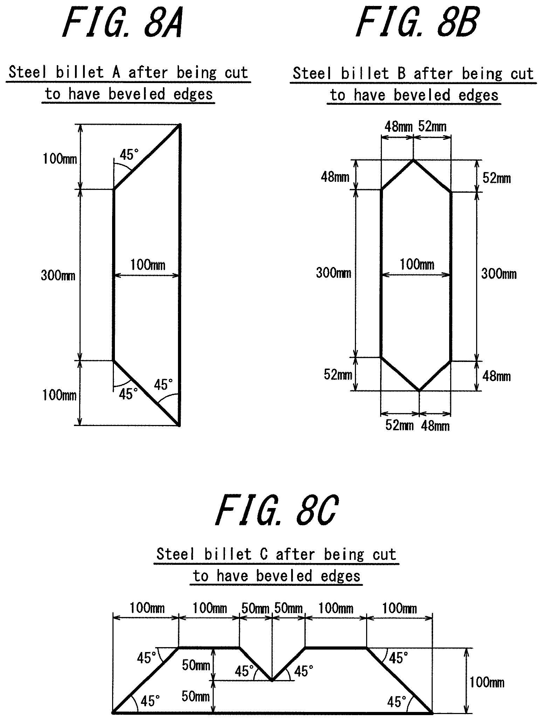

FIG. 8 shows the size and shape of steel billets, after being cut to have beveled edges, of the iron core of a transformer produced in examples.

### DETAILED DESCRIPTION

Our methods and products will be described in detail below.

### [Irradiated material]

The object to be irradiated with an electron beam in the disclosure is a grain-oriented electrical steel sheet. Although a grain-oriented electrical steel sheet is normally formed by applying an insulating coating such as tension coating on a forsterite film existing on a steel substrate, in the disclosure, there is no problem if a forsterite film is not formed between the steel substrate and the insulating coating.

### [Type of irradiation beam]

In the disclosure, magnetic domain refining treatment is carried out by scanning an electron beam over the surface of the above grain-oriented electrical steel sheet in a direction intersecting the rolling direction at intervals in the rolling direction, and the means for introducing strain to the steel sheet is limited to electron beam irradiation. With techniques other than electron beam irradiation, due to the large interaction with insulating coating existing on the steel sheet surface, plastic strain caused by high dislocation density is introduced into the damaged portion of the insulating coating or the surface layer portion of the steel substrate immediately below the coating and results in deterioration of hysteresis loss and hence deterioration of iron loss properties. For these reasons, the best iron loss properties cannot be obtained.

In contrast, when using an electron beam, interaction with insulating coating is limited to be small by the dynamic effect of the electron beam, and interaction with the steel substrate inside the steel sheet becomes large. Therefore, it is possible to impart a magnetic domain refining effect in a state where plastic strain caused by high dislocation density is not introduced into the damaged portion of the insulating coating, the forsterite film, or the surface layer part of the steel substrate immediately below the coating.

Further, one or both sides of the steel sheet may be irradiated with the electron beam. Moreover, the direction intersecting the rolling direction is a direction perpendicular to the rolling direction. Therefore, if the steel sheet transverse direction is 90 °, the direction intersecting the rolling direction is in a range of 75 ° to 105 °, and within this range, the effect of the disclosure is suitably exhibited.

### [Modulated irradiation line region]

While an irradiation line region of an electron beam is formed by scanning the electron beam in the direction intersecting the rolling direction, in this irradiation line region, a so-called continuous irradiation as shown in Fig. 3 in which irradiation is carried out under a fixed irradiation condition is not performed, but a repeating unit comprising a retention region 1 and a travelling region 2 as shown in Fig. 1 is formed, and such repeating units are repeatedly formed and connected to each other in the irradiation line region direction to form a modulated irradiation line region. This is one of the most important techniques of the disclosure.

As shown in Fig. 2 as condition 1, with the so-called continuous irradiation where electron beam irradiation is performed in an intersecting direction under a fixed irradiation condition, the best iron loss value and best magnetostrictive property could not be obtained under substantially the same irradiation condition and as a result, low iron loss and low noise could not be achieved with the same transformer.

In order to achieve low iron loss and low noise at the same time with the same transformer by obtaining the best iron loss value and best magnetostrictive property under the same irradiation condition, it is important to form a repeating unit comprising a retention region and a travelling region, rather than adopting continuous irradiation, and to repeat a process to form such repeating units and connect them to each other in the irradiation line region direction to form a modulated irradiation line region as shown in Fig. 1. Regarding the reference symbols in the drawings, reference numeral 1 indicates a retention region, reference numeral 2 indicates a travelling region, reference numeral 3 indicates a repeating unit (retention point interval), and the alphabet d indicates the beam diameter.

It is required that the beam diameter d of the electron beam in the modulated irradiation line region be 0.40 mm or less, and that the periodic distance of the repeating unit in the modulated irradiation line region be 2/3 × d mm to 2.5 × d mm. Here, the lower limit of the beam diameter d is 0.10 mm, and the beam diameter is a beam irradiation diameter prescribed by half value width of the energy profile using a known slit method.

Hereinbelow, reference will be made to the experimental results which served as the basis of the above.

### [Experiment 1]

Grain-oriented electrical steel sheets with sheet thickness of 0.23 mm, B₈ of 1.937 T, and iron loss W_{17/50} of 0.86 W/kg were irradiated with an electron beam with an acceleration voltage: 60 kV, beam current: 9 mA, in the sheet transverse direction at intervals in the rolling direction of 6 mm, while varying the beam diameter from 0.20 mm to 0.60 mm by varying the distance between the sample and the electron beam to form a modulated irradiation line region (average scanning rate: 30 m/s). In doing so, a retention time of 0.010 msec and a retention point interval of 0.45 mm were adopted as the condition to form a repeating unit comprising a retention region and a travelling region, and such repeating units were connected to each other in the sheet transverse direction.

The results of investigating the relationship between beam diameter d and iron loss W_{17/50} as well as the relationship between beam diameter d and magnetostriction λp-p when performing electron beam irradiation under the above conditions are shown in Fig. 4.

It can be seen from Fig. 4 that under conditions in which the beam diameter d is larger than 0.40 mm, not only does iron loss properties deteriorate, but magnetostriction significantly increases.

### [Experiment 2]

Grain-oriented electrical steel sheets with sheet thickness of 0.23 mm, B₈ of 1.942 T, and iron loss W_{17/50} of 0.85 W/kg were irradiated with an electron beam with an acceleration voltage: 60 kV, beam current: 9 mA was irradiated in the sheet transverse direction at intervals in the rolling direction of 6 mm, while varying the beam diameter from 0.10 mm to 0.40 mm by varying the distance between the sample and the electron beam to form a modulated irradiation line region under condition A (average scanning rate: 25 m/s). In doing so, repeating units were connected to each other in the sheet transverse direction where each repeating unit comprises a retention region and a travelling region with the retention time being 0.008 msec and retention point interval being 0.20 mm, and under condition B (average scanning rate: 25 m/s) where each repeating unit comprises a retention region and a travelling region with the retention time being 0.02 msec and retention point interval being 0.50 mm.

The results of investigating the relationship between beam diameter and iron loss as well as the relationship between beam diameter and magnetostriction when performing electron beam irradiation under the above two conditions A and B are shown in Figs. 5 and 6.

Taking into consideration of the results of Figs. 5 and 6 in relation with the periodic distance of repeating unit and beam diameter d, it can be seen from Fig. 5 that when the periodic distance of the repeating unit is less than 2/3 × d mm (when the beam diameter d exceeds 0.3 mm in condition A), magnetostriction significantly increases. Further, it can be seen from Fig. 6 that when the periodic distance of the repeating unit exceeds 2.5 × d mm (when the beam diameter d is less than 0.2 mm in condition B), the reduction in iron loss is insufficient.

Therefore, it is considered that, when the retention region of the beam is excessively overlapped, the influence of the increase in magnetostriction caused by the local increase in strain is too large compared to the iron loss reduction effect, while when the retention region of the beam is separated too far compared to the magnetic domain width, a sufficient magnetic domain refining effect cannot be obtained.

In view of the above results, the beam diameter d (mm) of the electron beam was set to 0.40 mm or less, and the periodic distance of the repeating unit was set to a range of 2/3 × d mm to 2.5 × d mm in relation with the beam diameter d. Since a sufficient magnetic domain refining effect cannot be obtained in the non-irradiated region when the repeating units are not connected to, but separated from each other in the sheet transverse direction, the technique disclosed herein requires that the repeating units be connected to each other in the sheet transverse direction. In this experiment, the lower limit value of the beam diameter is 0.10 mm because if the beam diameter is too small as compared to the magnetic domain width, it is disadvantageous in terms of producing divided magnetic domains. Therefore, the lower limit of the beam diameter d is preferably around 0.10 mm.

Further, it is necessary that the repeating interval of the above modulated irradiation line region in the rolling direction is from 4.0 mm to 12.5 mm.

When the irradiation interval in the rolling direction of the modulated irradiation line region is less than 4.0 mm, iron loss increases and magnetostriction deteriorates as shown in Fig. 2. On the other hand, iron loss increases and magnetostriction deteriorates also when the interval exceeds 12.5 mm, and therefore it is necessary that the rolling direction repeating interval is from 4.0 mm to 12.5 mm. A preferable range is from 5.0 mm to 10 mm.

Further, we examined the influence of the acceleration voltage of the electron beam. When the acceleration voltage of the electron beam is high, electrons penetrate deeper inside the steel sheet, and therefore it is considered effective particularly for magnetic domain refining of thick grain-oriented electrical steel sheets.

In view of the above, the following examination was made.

### [Experiment 3]

Grain-oriented electrical steel sheets with sheet thickness of 0.27 mm, B₈ of 1.945 T, and iron loss W_{17/50} of 0.93 W/kg were irradiated with an electron beam with the acceleration voltage and the beam current shown in Table 2 (beam output being constant) in the sheet transverse direction at intervals in the rolling direction of 8 mm, while maintaining a beam diameter of 0.20 mm by varying the distance between the sample and the electron beam for each condition. In doing so, a retention time of 0.0075 msec and a retention point interval of 0.30 mm were adopted as the condition to form a repeating unit comprising a retention region and a travelling region, and such repeating units were connected to each other in the sheet transverse direction to form a modulated irradiation line region (average scanning rate: 40m/s).

The results of investigating the iron loss and magnetostriction when performing electron beam irradiation under the conditions shown in Table 2 are also shown in Table 2.

[Table 2]

**Table 2**

| Electron Beam | | Characteristics of Steel Sheet Subjected to Electron Beam Irradiation | |
|---|---|---|---|
| Acceleration Voltage (kV) | Beam Current (mA) | W_{17/50} (W/kg) | λp-p (×10⁻⁷) |
| 40 | 15.0 | 0.812 | 2.8 |
| 60 | 10.0 | 0.817 | 3.0 |
| 80 | 7.5 | 0.808 | 2.9 |
| 100 | 6.0 | 0.787 | 2.8 |
| 120 | 5.0 | 0.779 | 2.8 |
| 150 | 4.0 | 0.773 | 2.8 |

It can be seen from Table 2 that, when the acceleration voltage of the electron beam is 100 kV or more, iron loss decreases without an increase in magnetostriction. Therefore, the acceleration voltage of the electron beam is preferably 100 kV or higher. However, if the acceleration voltage of the electron beam becomes too high, costs for manufacturing an electron gun, power supply and the like will increase and result in an increase in size of the X-ray shielding facility for preventing X-ray leakage caused during electron beam irradiation. Therefore, the upper limit of the acceleration voltage of the electron beam is preferably around 300 kV.

### [Energy density of irradiation line]

Next, as to the intensity of the electron beam, rather than the technique described in PTL 8 where said intensity is determined by the value of beam irradiation line density β, it is simpler and more practical to use the technique of setting the intensity with which long and narrow divided magnetic domains extending in the modulated irradiation line direction are formed at least on the irradiated side as the lower limit value, and setting the intensity with which coating damage does not occur on the irradiated side as the upper limit value. Therefore, this technique was adopted in the disclosure.

### [Evaluation on iron loss and noise of transformer]

Iron loss and noise of the transformer were evaluated using a transformer with an iron core of stacked three-phase tripod type as shown in Fig. 7. As shown in FIG. 7, the transformer was formed by steel sheets with outer dimensions of 500 mm square and width of 100 mm. Steel sheets each having been sheared to be in shapes with beveled edges as shown in Fig. 8 were stacked to obtain a stack thickness of 100 mm, fastened by a band, and then a secondary coil and a primary coil were wound around the leg portions of the steel sheets which in turn were charged into a tank filled with insulating oil, connected to a measuring equipment, and measured.

The transformers were excited using a primary coil with the three phases being 120 degrees out of phase with one another, the cross section was obtained from the iron core weight using the induced voltage value generated in the secondary coil, and the iron loss and noise were measured with the magnetic flux density of the iron core at 1.7 T. Regarding noise, a microphone was used to record vibration noise generated around the transformer, and the noise levels were represented in units of dBA with A-scale frequency weighting. Further, iron loss is shown as the loss per weight of transformer obtained by subtracting the amount of copper loss from the voltage and current value of the primary coil side at a no-load state with the secondary coil in an open state.

### EXAMPLES

### (Example 1)

Grain-oriented electrical steel sheets having a forsterite film on the steel sheet surface and tension coating baked thereon having sheet thickness: 0.23 mm, magnetic flux density B₈: 1.939 T, and iron loss W_{17/50}: 0.837 W/kg were divided into eight parts and each part was subjected to magnetic domain refining treatment under the following conditions.

Regarding the means for magnetic domain refining, each part was continuously irradiated with an electron beam with an acceleration voltage: 150 kV, beam current: 5.0 mA, and beam diameter: 0.18 mm, in the sheet transverse direction at a scanning rate of 40 m/sec under a fixed irradiation condition. To prepare comparative examples, one steel sheet was irradiated with the electron beam at intervals in the rolling direction of 5.0 mm (comparative example A1), and another steel sheet was irradiated at intervals in the rolling direction of 7.5 mm (comparative example A2). In these comparative examples, the coating was partially peeled off.

Next, two other steel sheets were irradiated with an electron beam of the same condition as the above, and for these steel sheets, a retention time of 0.005 msec and a retention point interval of 0.20 mm were adopted as the condition to form a repeating unit comprising a retention region and a travelling region, and such repeating units were connected to each other in the sheet transverse direction to form a modulated irradiation line region at an average scanning rate of 40 m/sec. At this time, to prepare examples, one steel sheet was irradiated at repeating intervals in the rolling direction of 5.0 mm (example A3), and another steel sheet was irradiated at repeating intervals of 7.5 mm (example A4). In these examples, no damage was found in the coating, and through magnetic domain observation using the Bitter method, long and narrow divided magnetic domains extending in the sheet transverse direction were observed in the irradiation line region.

Further, another steel sheet was irradiated with an electron beam of the same condition with the repeating intervals in the rolling direction set to 5.0 mm, and for this steel sheet, a retention time of 0.0025 msec and a retention point interval of 0.10 mm were adopted as the condition to form a repeating unit comprising a retention region and a travelling region, and such repeating units were connected to each other in the sheet transverse direction to form a modulated irradiation line region at an average scanning rate of 40 m/sec (comparative example A5).

Further, another steel sheet was irradiated with an electron beam of the same condition with the repeating interval in the rolling direction set to 5.0 mm, and for this steel sheet, a retention time of 0.016 msec and a retention point interval of 0.48 mm were adopted as the condition to form a repeating unit comprising a retention region and a travelling region, and such repeating units were connected to each other in the sheet transverse direction to form a modulated irradiation line region at an average scanning rate of 40 m/sec (comparative example A6).

For the remaining two steel sheets, discontinuous pulse irradiation was performed in the steel sheet transverse direction using a Q-switched Nd:YAG laser. At this time, a conventionally well known irradiation condition was applied. In detail, the energy of the laser pulse was set to 3.3 mJ/pulse, the laser spot was set to have a circular shape with diameter: 0.18 mm, the irradiation interval in the sheet transverse direction was set to 0.3 mm, and laser wavelength was set to 1064 nm. Irradiation was carried out with the irradiation interval in the rolling direction set to 5.0 mm for one steel sheet (comparative example A7) and 7.5 mm for another (comparative example A8). In these comparative examples, a clear coating defect of circular shape and exposure of the steel substrate were found in the area that received a laser beam, and thus an insulation coating was thinly applied again and baked at a low temperature to improve insulation properties.

For each of these eight types of grain-oriented electrical steel sheets subjected to magnetic domain refining, a portion was subjected to measurement of iron loss and magnetostriction. Further, using the remaining portions of the steel sheets, transformers were produced by the aforementioned method, and iron loss and noise at 1.7 T were measured. The results thereof are shown in Table 3.

[Table 3]

**Table 3**

| No. | Means of Magnetic Domain Refining | Feature of Irradiated Beam | Retention Point Interval during Modulated Irradiation of Electron Beam (mm) | Interval of Irradiation Line Region in Rolling Direction (mm) | Characteristics of Steel Sheet Subjected to Magnetic Domain Refining | | Characteristics of Transformer | | Remarks |
|---|---|---|---|---|---|---|---|---|---|
| | | | | | W_{17/50} (W/kg) | λp-p (×10⁻⁷) | W_{17/50} (W/kg) | Noise (dBA) | |
| A1 | Electron Beam | Continuous Irradiation | - | 5.0 | 0.730 | 8.5 | 0.893 | 53 | Comparative Example |
| A2 | Electron Beam | Continuous Irradiation | - | 7.5 | 0.744 | 4.6 | 0.940 | 47 | Comparative Example |
| A3 | Electron Beam | Modulated Irradiation Line | 0.20 | 5.0 | 0.687 | 3.4 | 0.841 | 43 | Example |
| A4 | Electron Beam | Modulated Irradiation Line | 0.20 | 7.5 | 0.676 | 3.1 | 0.822 | 41 | Example |
| A5 | Electron Beam | Modulated Irradiation Line | 0.10 | 5.0 | 0.712 | 4.7 | 0.876 | 47 | Comparative Example |
| A6 | Electron Beam | Modulated Irradiation Line | 0.48 | 5.0 | 0.735 | 3.5 | 0.908 | 43 | Comparative Example |
| A7 | Pulse Laser | Intermittent Irradiation | - | 5.0 | 0.747 | 7.7 | 0.923 | 51 | Comparative Example |
| A8 | Pulse Laser | Intermittent Irradiation | - | 7.5 | 0.768 | 4.3 | 0.975 | 49 | Comparative Example |

It can be seen from Table 3 that, compared to the comparative examples, the grain-oriented electrical steel sheets subjected to magnetic domain refining manufactured with the method disclosed herein have better iron loss properties and magnetostrictive properties, and exhibit better iron loss properties and noise properties as a transformer. Further, it should be noted that, when the irradiation interval in the rolling direction is set to be 7.5 mm, unlike the technique of the comparative example, best results are achieved in terms of both iron loss and noise, and an excellent effect as a grain-oriented electrical steel sheet for a transformer is obtained.

### (Example 2)

Grain-oriented electrical steel sheets having a forsterite film on the steel sheet surface and tension coating baked thereon having sheet thickness: 0.27 mm, magnetic flux density B₈: 1.941 T, and iron loss W_{17/50}: 0.918 W/kg were divided into eight parts, and each part was subjected to magnetic domain refining treatment under the following conditions.

Regarding the means for magnetic domain refining, each part was continuously irradiated with an electron beam with an acceleration voltage: 60 kV, beam current: 10 mA, and beam diameter: 0.30 mm, in the sheet transverse direction at a scanning rate of 30 m/sec under a fixed irradiation condition. To prepare comparative examples, one steel sheet was irradiated with the electron beam at intervals in the rolling direction of 5.0 mm (comparative example B1), and another steel sheet was irradiated with at intervals of 7.5 mm (comparative example B2). In these comparative examples, the coating was partially peeled off.

Next, two other steel sheets were irradiated with an electron beam of the same condition as the above, and for these steel sheets, a retention time of 0.010 msec and a retention point interval of 0.30 mm was adopted for the condition to form a repeating unit comprising a retention region and a travelling region, and such repeating units were connected to each other in the sheet transverse direction to form a modulated irradiation line region at an average scanning rate of 30 m/sec. At this time, to prepare examples, one steel sheet was irradiated at repeating intervals in the rolling direction of 5.0 mm (example B3), and another steel sheet was irradiated at repeating intervals of 7.5 mm (example B4). In these examples, no damage was found in the coating, and through magnetic domain observation using the Bitter method, long and narrow divided magnetic domains extending in the sheet transverse direction were observed in the irradiation line region.

Further, another steel sheet was irradiated with an electron beam of the same condition with the repeating interval in the rolling direction set to 5.0 mm, and for this steel sheet, a retention time of 0.005 msec and a retention point interval of 0.15 mm was adopted for the condition to form a repeating unit comprising a retention region and a travelling region, and such repeating units were connected to each other in the sheet transverse direction to form a modulated irradiation line region at an average scanning rate of 30 m/sec (comparative example B5).

Further, another steel sheet was irradiated with an electron beam of the same condition with the repeating interval in the rolling direction set to 5.0 mm, and for this steel sheet, a retention time of 0.03 msec and a retention point interval of 0.90 mm was adopted for the condition to form a repeating unit comprising a retention region and a travelling region, and such repeating units were connected in the sheet transverse direction to form a modulated irradiation line region at an average scanning rate of 30 m/sec (comparative example B6).

For the remaining two steel sheets, discontinuous pulse irradiation was performed in the steel sheet transverse direction using a Q-switched Nd:YAG laser. At this time, a conventionally well known irradiation condition was applied. In detail, the energy of the laser pulse was set to 4.5 mJ/pulse, the laser sport was set to have a circular shape with diameter: 0.22 mm, the irradiation interval in the sheet transverse direction was set to 0.3 mm, and laser wavelength was set to 1064 nm. Irradiation was carried out with the irradiation interval in the rolling direction set to 5.0 mm for one steel sheet (comparative example B7) and 7.5 mm for another (comparative example B8). With these comparative examples, a clear coating defect of circular shape and exposure of the steel substrate were found in the area that received a laser beam, and thus an insulation coating was thinly applied again and baked at a low temperature to improve insulation properties.

For each of these eight types of grain-oriented electrical steel sheets subjected to magnetic domain refining, a portion was subjected to measurement of iron loss and magnetostriction. Further, using the remaining portions of the steel sheets, transformers were produced by the aforementioned method and iron loss and noise at 1.7 T were measured. The results thereof are shown in Table 4.

[Table 4]

**Table 4**

| No. | Means of Magnetic Domain Refining | Feature of Irradiated Beam | Retention Point Interval during Modulated Irradiation of Electron Beam (mm) | Interval of Irradiation Line Irradiation Region in Rolling Direction (mm) | Characteristics of Steel Sheet Subjected to Magnetic Domain Refining | | Characteristics of Transformer | | Remarks |
|---|---|---|---|---|---|---|---|---|---|
| | | | | | W_{17/50} (W/kg) | λp-p (×10⁻⁷) | W_{17/50} (W/kg) | Noise (dBA) | |
| B1 | Electron Beam | Continuous Irradiation | - | 5.0 | 0.833 | 8.0 | 1.037 | 51 | Comparative Example |
| B2 | Electron Beam | Continuous Irradiation | - | 7.5 | 0.851 | 4.5 | 1.089 | 48 | Comparative Example |
| B3 | Electron Beam | Modulated Irradiation Line | 0.30 | 5.0 | 0.798 | 3.4 | 0.982 | 42 | Example |
| B4 | Electron Beam | Modulated Irradiation Line | 0.30 | 7.5 | 0.787 | 3.2 | 0.965 | 41 | Example |
| B5 | Electron Beam | Modulated Irradiation Line | 0.15 | 5.0 | 0.805 | 4.7 | 0.991 | 48 | Comparative Example |
| B6 | Electron Beam | Modulated Irradiation Line | 0.90 | 5.0 | 0.840 | 3.3 | 1.043 | 42 | Comparative Example |
| B7 | Pulse Laser | Intermittent Irradiation | - | 5.0 | 0.844 | 7.8 | 1.050 | 50 | Comparative Example |
| B8 | Pulse Laser | Intermittent Irradiation | - | 7.5 | 0.862 | 4.6 | 1.098 | 49 | Comparative Example |

It can be seen from Table 4 that, compared to the comparative examples, the grain-oriented electrical steel sheets subjected to magnetic domain refining manufactured with the method disclosed herein have better iron loss properties and magnetostrictive properties, and exhibits better iron loss properties and noise properties as a transformer. Further, it should be noted that, when the irradiation interval in the rolling direction is set to be 7.5 mm, unlike the technique of the comparative example, best results are achieved in terms of both iron loss and noise, and an excellent effect as a grain-oriented electrical steel sheet for a transformer is obtained.

### REFERENCE SIGNS LIST

- 1: Retention region
- 2: Travelling region
- 3: Repeating unit (Retention point interval)

## Claims

1. A grain-oriented electrical steel sheet for a low-noise transformer subjected to magnetic domain refining treatment by irradiating a steel sheet surface with an electron beam having a beam diameter d of 0.40 mm or less in a line region extending in a direction intersecting a rolling direction, forming the irradiated line region into a modulated irradiation line region with repeating units, each unit comprising a retention region and a travelling region, and repeating a process to form the modulated irradiation line region at intervals in the rolling direction, wherein
the modulated irradiation line region is formed with repeating units connected to each other in the line region direction,
a periodic distance of the repeating units in the modulated irradiation line region is 2/3 × d mm to 2.5 × d mm,
a repeating interval of the modulated irradiation line region in the rolling direction is 4.0 mm to 12.5 mm, and
intensity of the electron beam is not lower than an intensity with which long and narrow divided magnetic domains extending in the modulated irradiation line region direction are formed at least on an irradiated side, and not higher than an intensity with which coating damage does not occur and a plastic strain region is not formed on the irradiated side.

2. The grain-oriented electrical steel sheet for a low-noise transformer according to claim 1 wherein an acceleration voltage of the electron beam is 100 kV or more.

3. The grain-oriented electrical steel sheet for a low-noise transformer according to claim 1 or 2 wherein the repeating interval of the modulated irradiation line region in the rolling direction is 5.0 mm to 10 mm.

4. A method for manufacturing a grain-oriented electrical steel sheet for a low-noise transformer comprising subjecting the steel sheet to magnetic domain refining treatment by irradiating a steel sheet surface with an electron beam having a beam diameter d of 0.40 mm or less in a line region extending in a direction intersecting a rolling direction, forming the irradiated line region into a modulated irradiation line region with repeating units, each comprising a retention region and a travelling region, and repeating a process to form the modulated irradiation line region at intervals in the rolling direction, wherein
the modulated irradiation line region is formed with repeating units connected to each other in the line region direction,
a periodic distance of the repeating units in the modulated irradiation line region is 2/3 × d mm to 2.5 × d mm,
a repeating interval of the modulated irradiation line region in the rolling direction is 4.0 mm to 12.5 mm, and
intensity of the electron beam is not lower than an intensity with which long and narrow divided magnetic domains extending in the modulated irradiation line region direction are formed at least on an irradiated side, and not higher than an intensity with which coating damage does not occur and a plastic strain region is not formed on the irradiated side.

5. The method for manufacturing a grain-oriented electrical steel sheet for a low-noise transformer according to claim 4 wherein an acceleration voltage of the electron beam is 100 kV or more.

6. The method for manufacturing a grain-oriented electrical steel sheet for a low-noise transformer according to claim 4 or 5 wherein the repeating interval of the modulated irradiation line region in the rolling direction is 5.0 mm to 10 mm.
